# EUROPEAN PATENT APPLICATION

(11) **EP 4 254 617 A1**
(43) Date of publication of application: **04.10.2023**
(21) Application number: 21959190.6
(22) Date of filing: 31.12.2021
(51) Int. Cl.: H01M 50/147

(54) **END CAP ASSEMBLY, BATTERY CELL, BATTERY, AND ELECTRIC DEVICE**

(30) Priority: 28.09.2021 CN 202122366644 U
(71) Applicant: Contemporary Amperex Technology Co., Limited, Ningde, Fujian 352100 (CN)
(72) Inventor: ZHOU, Wenlin, Ningde, Fujian 352100 (CN); XU, Liangfan, Ningde, Fujian 352100 (CN); WU, Ningsheng, Ningde, Fujian 352100 (CN); LI, Quankun, Ningde, Fujian 352100 (CN); WANG, Peng, Ningde, Fujian 352100 (CN)
(74) Representative: von Tietzen und Hennig, Nikolaus
(86) International application number: PCT/CN2021/143554
(87) International publication number: WO 2023/050631

(57) **Abstract**

Embodiments of the present application provide an end cover assembly, a battery cell, a battery, and an electrical apparatus. The end cover assembly is used for a battery cell, and includes: an end cover; a pressure relief mechanism, the pressure relief mechanism being arranged on the end cover, the pressure relief mechanism including a weak portion, and the pressure relief mechanism being configured to rupture along the weak portion to release the pressure inside the battery cell when the pressure reaches a threshold; and an insulating member, the insulating member being located on one side of the end cover facing an electrode assembly of the battery cell, the insulating member including a base portion and a guide portion arranged on the base portion, the base portion being connected to the end cover, and the guide portion communicating the space between the base portion and the pressure relief mechanism with the space on one side of the base portion facing away from the weak portion, wherein in a thickness direction of the end cover, a projection of the guide portion does not overlap with a projection of the weak portion, so as to reduce an impact of the electrolyte solution of the battery cell on the weak portion when the electrolyte solution flows into the space between the base portion and the pressure relief mechanism through the guide portion. The present application is capable of protecting the pressure relief mechanism and improving the safety performance of the battery cell.

## Description

### Cross-Reference to Related Applications

The present application claims priority of Chinese Patent Application No. 202122366644.0 filed on September 28, 2021 and entitled "END COVER ASSEMBLY, BATTERY CELL, BATTERY, AND ELECTRICAL APPARATUS", which is incorporated herein by reference in its entirety.

### Technical Field

The present application relates to the field of battery technologies, and more particularly to an end cover assembly, a battery cell, a battery, and an electrical apparatus.

### Background Art

Battery cells are widely used in electronic devices such as mobile phones, laptops, battery vehicles, electric vehicles, electric planes, electric ships, electric toy cars, electric toy ships, electric toy planes, and electric tools. Battery cells may include nickel-cadmium battery cells, nickel-hydrogen battery cells, lithium-ion battery cells, secondary alkaline zinc-manganese battery cells, and the like.

In the development of battery technologies, in addition to improving the performance of the battery cells, safety is also an issue that cannot be ignored. If the safety of a battery cell cannot be guaranteed, the battery cell cannot be used. Therefore, how to enhance the safety of the battery cells is an urgent technical problem to be solved in the battery technologies.

### Summary of the Invention

The present application provides an end cover assembly, a battery cell, a battery, and an electrical apparatus, which is capable of enhancing the safety of the battery cell.

In the first aspect, the embodiments of the present application provide an end cover assembly for a battery cell. The end cover assembly includes: an end cover; a pressure relief mechanism, the pressure relief mechanism being arranged on the end cover, the pressure relief mechanism including a weak portion, and the pressure relief mechanism being configured to rupture along the weak portion to release the pressure inside the battery cell when the pressure reaches a threshold; and an insulating member, the insulating member being located on one side of the end cover facing an electrode assembly of the battery cell, the insulating member including a base portion and a guide portion arranged on the base portion, the base portion being connected to the end cover, and the guide portion communicating the space between the base portion and the pressure relief mechanism with the space on one side of the base portion facing away from the weak portion, wherein in a thickness direction of the end cover, a projection of the guide portion does not overlap with a projection of the weak portion, so as to reduce an impact of the electrolyte solution of the battery cell on the weak portion when the electrolyte solution flows into the space between the base portion and the pressure relief mechanism through the guide portion.

In the above technical solution, the insulating member includes the base portion and the guide portion arranged on the base portion. The base portion is connected to the end cover. The base portion is capable of isolating the end cover and the electrode assembly, and ensuring the reliability of the battery cell. The guide portion communicates the space between the base portion and the pressure relief mechanism with the space on the side of the base portion facing away from the weak portion. When thermal runaway occurs in the battery cell, the weak portion is actuated, and the pressure inside the battery cell is capable of being relieved to the outside of the battery cell through the guide portion and the pressure relief mechanism. In the thickness direction of the end cover, the projection of the guide portion does not overlap with the projection of the weak portion. When the electrolyte solution flows through the guide portion to the space between the base portion and the pressure relief mechanism, it is capable of being buffered in the space between the base portion and the pressure relief mechanism to reduce the impact on the weak portion of the pressure relief mechanism, thereby protecting the pressure relief mechanism and improving the reliability and safety performance of using the battery cell.

In some embodiments, the projection of the guide portion in the thickness direction of the end cover is located outside the projection of the weak portion in the thickness direction of the end cover. In the embodiments of the present application, the electrolyte solution flows to the space between the base portion and the pressure relief mechanism through the guide portion, and the electrolyte solution flowing from the outside of the weak portion to the weak portion may be buffered, which is capable of significantly reducing the impact on the weak portion.

In some embodiments, the projection of the guide portion in the thickness direction of the end cover is located outside a projection of the pressure relief mechanism in the thickness direction of the end cover. In the embodiment of the present application, the guide portion and the pressure relief mechanism are arranged in a staggered manner, and when the electrolyte solution flows to the space between the base portion and the pressure relief mechanism through the guide portion, it will not directly impact the pressure relief mechanism, thereby reducing the risk of fracture of the weak portion.

In some embodiments, the guide portion includes a plurality of first guide holes, and the plurality of first guide holes are arranged at intervals in a circumferential direction of the weak portion. In the embodiments of the present application, the electrolyte solution flows slowly from the circumference of the weak portion into the space between the base portion and the pressure relief mechanism. The impact of the electrolyte solution on the weak portion is relatively uniform, which is capable of preventing the weak portion from being damaged by a local pressure.

In some embodiments, the shape of the first guide hole is adapted to a peripheral contour of the weak portion. In the embodiments of the present application, the electrolyte solution flows in from the periphery of the weak portion, and is capable of flowing evenly and slowly to the weak portion, thereby reducing the risk of local stress concentration in the weak portion.

In some embodiments, the insulating member further includes a first concave portion formed by recessing relative to an outer surface of the base portion in a direction facing away from the end cover, wherein the plurality of first guide holes are arranged on a bottom wall of the first concave portion, and the first guide holes communicate the first concave portion with the space on the side of the base portion facing away from the weak portion. In the embodiments of the present application, the first concave portion is capable of forming a flow channel. When the electrolyte solution flows into the space between the base portion and the pressure relief mechanism through the first guide holes, the electrolyte solution is capable of being further buffered in the first concave portion, and the impact of the buffered electrolyte solution on the pressure relief mechanism will be further reduced.

In some embodiments, the side wall of the first concave portion is arranged around the weak portion. In the embodiments of the present application, an occupied area of the first concave portion is relatively small, and an occupied area of the base portion is relatively large. The larger base portion is connected to the end cover, which is capable of playing a better supporting role for the end cover.

In some embodiments, the insulating member further includes a second concave portion formed by recessing relative to the outer surface of the base portion in the direction facing away from the end cover, and at least a part of the second concave portion is located on an outer side of the first concave portion in a first direction and is in communication with the first concave portion, the first direction being perpendicular to the thickness direction of the end cover; wherein the guide portion includes a second guide hole, the second guide hole is arranged on a bottom wall of the second concave portion and is located on the outer side of the first concave portion in the first direction, and the second guide hole communicates the second concave portion with the space on the side of the base portion facing away from the weak portion. In the embodiments of the present application, the electrolyte solution is capable of flowing into the second concave portion from the second guide hole and being buffered in the flow channel. The impact of the buffered electrolyte solution on the pressure relief mechanism will be further reduced.

In some embodiments, a part of the second concave portion is formed on the bottom wall of the first concave portion, and the depth of the second concave portion is greater than the depth of the first concave portion. In the embodiments of the present application, the electrolyte solution is buffered in the first concave portion and the second concave portion respectively, so as to reduce the impact on the pressure relief mechanism.

In some embodiments, the guide portion further includes a third guide hole, at least a part of the third guide hole is arranged on a side wall of the second concave portion and in communication with the first guide hole. In the embodiments of the present application, the first guide hole is in communication with the third guide hole, which is capable of increasing the flow channel and facilitating rapid flow of electrolyte solution between the base portion and the pressure relief mechanism.

In the second aspect, the embodiments of the present application provide a battery cell, including the end cover assembly according to any embodiment of the first aspect.

In the third aspect, the embodiments of the present application provide a battery, including a plurality of battery cells according to any embodiment of the second aspect.

In the fourth aspect, the embodiments of the present application provide an electrical apparatus, including the battery in the third aspect, and the battery is used for providing electric energy.

### Description of Drawings

In order to illustrate the technical solutions of the examples of the present application more clearly, the following briefly introduces the drawings required in the examples of the present application. Obviously, the drawings described below are only some examples of the present application. For those of ordinary skill in the art, other drawings can also be obtained according to the drawings without any creative effort.
Fig. 1 is a schematic structural diagram of a vehicle according to some embodiments of the present application;
Fig. 2 is a schematic exploded diagram of a battery according to some embodiments of the present application;
Fig. 3 is a schematic structural diagram of a battery module shown in Fig. 2;
Fig. 4 is a schematic exploded diagram of a battery cell according to some embodiments of the present application;
Fig. 5 is a schematic structural diagram of an end cover assembly according to some embodiments of the present application;
Fig. 6 is a schematic cross-sectional diagram of the end cover assembly shown in Fig. 5 along a line A-A;
Fig. 7 is a schematic enlarged diagram of the end cover assembly shown in Fig. 6 at position I;
Fig. 8 is a schematic cross-sectional diagram of the end cover assembly shown in Fig. 5 along a line B-B;
Fig. 9 is a schematic exploded diagram of the end cover assembly shown in Fig. 5; and
Fig. 10 is a schematic enlarged diagram of the end cover assembly shown in Fig. 9 at position II.

In the drawings, the drawings are not drawn to actual scale.
X. Thickness direction; Y. First direction;
1. Vehicle; 2. Battery; 3. Controller; 4. Motor; 5. Box body; 51. First box body portion; 52. Second box body portion; 53. Accommodating space; 6. Battery module; 7. Battery cell; 10. Electrode assembly; 11. Main body part; 12. Tab portion; 13. Current collecting member; 20. Shell assembly; 21. Case; 22. End cover assembly; 221. Electrode terminal; 23. End cover; 8. Pressure relief mechanism; 81. Weak portion; 9. Insulating member; 91. Base portion; 92. Guide portion; 921. First guide hole; 922. Second guide hole; 923. Third guide hole; 93. First concave portion; 93a. First bottom wall; 93b. First side wall; 94. Second concave portion; 94a. Second bottom wall; 94b. Second sidewall.

### Detailed Description

To make the objective, technical solutions and advantages of the embodiments of the present application clearer, the technical solutions in the embodiments of the present application will be clearly described below with reference to the drawings in the embodiments of the present application. Obviously, the embodiments described are some of rather than all of the embodiments of the present application. Based on the examples in the present application, all other examples obtained by those of ordinary skill in the art without creative effort fall within the protection scope of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the foregoing description of the drawings are intended to cover non-exclusive inclusions. The terms "first," "second," and the like in the description and claims of the present application or the above drawings are used for distinguishing different objects, rather than describing a specific sequence or primary-subordinate relationship.

Reference to "an embodiment" in the present application means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection," and "attachment" should be understood in a broad sense, unless otherwise explicitly specified or defined. For example, it may be a fixed connection, a detachable connection, or an integrated connection; and it may be a direct connection or an indirect connection through an intermediate medium, or may be a communication between the interior of two elements. For those of ordinary skill in the art, the specific meanings of the above terms in the present application may be understood according to specific situations.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

In the embodiments of the present application, the same reference numerals denote the same components, and for the sake of brevity, detailed descriptions of the same components are omitted in different embodiments. It should be understood that the thickness, length, width, and other dimensions of the various components in the embodiments of the application shown in the drawings, as well as the overall thickness, length, and width of the integrated apparatus, are for illustrative purposes only, and should not constitute any limitation to the present application.

"A plurality of" in the present application refers to two or more (including two).

In the present application, the battery cell may include a lithium ion secondary battery cell, a lithium ion primary battery cell, a lithium sulfur battery cell, a lithium/sodium ion battery cell, a sodium ion battery cell, a magnesium ion battery cell, or the like, which will not be limited in the embodiments of the present application. The battery cell may be cylindrical, flat, rectangular, or in other shapes, which is also not limited in the embodiments of the present application. The battery cells are generally divided into three types according to encapsulating manners: cylindrical battery cells, rectangular square battery cells, and pouch cells, which are not limited in the embodiments of the present application.

The battery mentioned in the examples of the present application refers to a single physical module including one or more battery cells to provide a higher voltage and capacity. For example, the battery mentioned in the present application may include a battery module, a battery pack, or the like. The battery generally includes a box body for encapsulating one or a plurality of battery cells. The box body can prevent liquids or other foreign matters from affecting the charging or discharging of the battery cells.

The battery cell includes an electrode assembly and an electrolyte solution, and the electrode assembly includes a positive electrode sheet, a negative electrode sheet, and a spacer. The battery cell operates mainly relying on movement of metal ions between the positive electrode sheet and the negative electrode sheet. The positive electrode sheet includes a positive electrode current collector and a positive electrode active material layer, wherein the positive electrode active material layer is coated on a surface of the positive electrode current collector; the positive electrode current collector includes a positive electrode current collector portion and a positive tab protruding from the positive electrode current collector portion, the positive electrode current collector portion is coated with the positive electrode active material layer, and at least a part of the positive tab is not coated with the positive electrode active material layer. Taking a lithium-ion battery cell as an example, the material of the positive electrode current collector may be aluminum, the positive electrode active material layer includes a positive electrode active material, and the positive electrode active material may be lithium cobalt oxide, lithium iron phosphate, ternary lithium, lithium manganate, or the like. The negative electrode sheet includes a negative electrode current collector and a negative electrode active material layer, wherein the negative electrode active material layer is coated on a surface of the negative electrode current collector; the negative electrode current collector includes a negative electrode current collector portion and a negative tab protruding from the negative electrode current collector portion, the negative electrode current collector portion is coated with the negative electrode active material layer, and at least a part of the negative tab is not coated with the negative electrode active material layer. The material of the negative electrode current collector may be copper, the negative electrode active material layer includes a negative electrode active material, and the negative electrode active material may be carbon, silicon, or the like. In order to ensure that no fusing occurs when a large current passes, there are a plurality of positive tabs which are stacked together, and there are a plurality of negative tabs which are stacked together. The spacer may be made from polypropylene (PP), polyethylene (PE), or the like. In addition, the electrode assembly may be of a wound structure or a laminated structure, which is not limited in the embodiments of the present application.

The battery cell may also include a shell assembly, and the shell assembly has an accommodating cavity inside, and the accommodating cavity is a closed space provided by the shell assembly for the electrode assembly and an electrolyte solution. The shell assembly includes a case and an end cover assembly. The case is a hollow structure with one side open. The end cover assembly covers the opening of the case and forms a sealed connection to form the accommodating cavity for accommodating the electrode assembly and the electrolyte solution.

Many design factors, such as energy density, cycle life, discharge capacity, charge-discharge rate and other performance parameters, should be considered in the development of the battery technology. In addition, the safety of the battery also needs to be considered.

A pressure relief mechanism on the battery cell has an important impact on the safety of the battery. For example, when a short circuit, overcharge, or the like occurs, it may cause thermal runaway inside the battery cell, resulting in a sudden rise in pressure or temperature. In this case, internal pressure and temperature can be relieved through the actuation of the pressure relief mechanism to prevent explosion, fire, or the like of the battery cell.

The pressure relief mechanism refers to an element or component that is actuated to relieve the internal pressure when the internal pressure of the battery cell reaches a predetermined threshold. The design of the threshold varies according to different design requirements. The threshold may depend on the materials of one or more of the positive electrode sheet, the electrode sheet electrode sheet, the electrolyte solution, and the spacer in the battery cell. The pressure relief mechanism may take the form of an explosion-proof valve, a gas valve, a pressure relief valve, a safety valve, or the like, and may specifically adopt a pressure-sensitive or temperature-sensitive element or structure. That is, when the internal pressure or temperature of the battery cell reaches a predetermined threshold, the pressure relief mechanism performs an action or a weak structure arranged in the pressure relief mechanism is damaged, so as to form an opening or channel for releasing the internal pressure.

The "actuate" mentioned in the present application means that the pressure relief mechanism is actuated or activated to a certain state, so that the internal pressure of the battery cell can be relieved. Actions produced by the pressure relief mechanism may include, but are not limited to, at least a part of the pressure relief mechanism being broken, crushed, torn, opened, or the like. When the pressure relief mechanism is actuated, high temperature and high pressure substances inside the battery cell may be discharged outward from the actuated part as emissions. In this way, the pressure of the battery cell is capable of being relieved under controllable pressure or temperature, so as to prevent potential more serious accidents.

The emissions from the battery cell mentioned in the present application include, but are not limited to, the electrolyte solution, dissolved or split positive and negative electrode sheets, fragments of the spacer, high temperature and high pressure gas generated by reaction, flames, and the like.

The inventor has found that, during the cycle of the battery cell, the battery cell blasts and relieves pressure when the internal pressure does not reach a predetermined threshold, and thus the structure and use environment of the battery cell have been analyzed and studied. The inventor has found that the pressure relief mechanism of the battery cell has premature fatigue aging, which leads to a decrease in the threshold of the pressure relief mechanism. When the internal pressure of the battery cell has not reached an original preset pressure value, the pressure relief mechanism will explode in advance. After further research, it was found that during the use of the battery cell, the electrolyte solution may impact a weak structure of the pressure relief mechanism due to vibration of the battery cell, causing the weak structure to rupture, and resulting in a decrease in an opening threshold of the pressure relief mechanism.

In view of this, a technical solution is provided in the embodiments of the present application. In the technical solution, an end cover assembly of a battery cell includes: an end cover; a pressure relief mechanism, the pressure relief mechanism being arranged on the end cover, the pressure relief mechanism including a weak portion, and the pressure relief mechanism being configured to rupture along the weak portion to release the pressure inside the battery cell when the pressure reaches a threshold; and an insulating member, the insulating member being located on one side of the end cover facing an electrode assembly of the battery cell, the insulating member including a base portion and a guide portion arranged on the base portion, the base portion being connected to the end cover, and the guide portion communicating the space between the base portion and the pressure relief mechanism with the space on one side of the base portion facing away from the weak portion, wherein in a thickness direction of the end cover, a projection of the guide portion does not overlap a projection of the weak portion, so as to reduce an impact of the electrolyte solution of the battery cell on the weak portion when the electrolyte solution flows into the space between the base portion and the pressure relief mechanism through the guide portion. The end cover assembly with this structure reduces the risk of the electrolyte solution directly impacting the weak portion of the pressure relief mechanism, reduces the impact of the electrolyte solution on the weak portion, reduces the risk of the weak portion rupturing when the internal pressure of the battery cell does not reach the threshold, and is capable of improving the safety performance of the battery cell.

The technical solution described in the embodiments of the present application is applicable to a battery cell, a battery containing the battery cell, and an electrical apparatus using the battery.

The electrical apparatus may be, but not limited to, a vehicle, a mobile phone, a portable device, a laptop computer, a ship, a spacecraft, an electric toy, an electric tool, and the like. The vehicle may be a fuel vehicle, a gas vehicle or a new energy vehicle. The new energy vehicle may be an all-electric vehicle, a hybrid electric vehicle, an extended-range electric vehicle, or the like. The spacecraft includes airplanes, rockets, space shuttles, spaceships, and the like. The electric toy includes fixed or mobile electric toys, such as game consoles, electric car toys, electric ship toys, and electric aircraft toys. The electric tool includes metal cutting electric tools, grinding electric tools, assembly electric tools, and railway electric tools, such as electric drills, electric grinders, electric wrenches, electric screwdrivers, electric hammers, impact drills, concrete vibrators, and electric planers. The electrical apparatus is not specially limited in the embodiments of the present application.

In the following examples, for the convenience of description, the electrical apparatus is a vehicle.

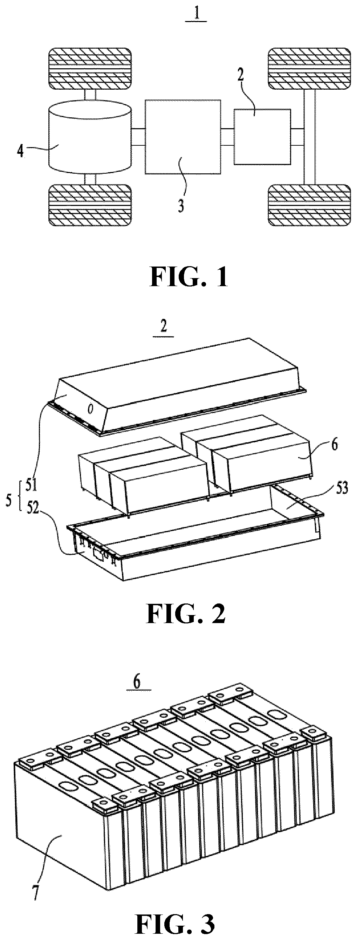

Fig. 1 is a schematic structural diagram of a vehicle according to some embodiments of the present application. As shown in Fig. 1, the interior of vehicle 1 is provided with battery 2, and battery 2 may be arranged at the bottom or head or tail of vehicle 1. Battery 2 may be configured to power vehicle 1. For example, battery 2 may be used as an operating power source of vehicle 1.

Vehicle 1 may further include controller 3 and motor 4. Controller 3 is used for controlling battery 2 to power motor 4, for example, for meeting operating power requirements when vehicle 1 is starting, navigating, and driving.

In some embodiments of the present application, battery 2 may not only be used as the operating power source of vehicle 1, but also be used as a driving power source of vehicle 1 to replace or partially replace fuel or natural gas to provide driving power for vehicle 1.

Fig. 2 is a schematic exploded diagram of a battery according to some embodiments of the present application. As shown in Fig. 2, battery 2 includes box body 5 and a battery cell (not shown in Fig. 2), and the battery cell is accommodated in box body 5.

Box body 5 is used for accommodating the battery cell, and box body 5 may be of various structures. In some embodiments, box body 5 may include first box body portion 51 and second box body portion 52. First box body portion 51 and second box body portion 52 cover each other, and first box body portion 51 and second box body portion 52 jointly define accommodating space 53 for accommodating the battery cell. Second box body portion 52 may be of a hollow structure with an opening at one end, first box body portion 51 is of a plate structure, and first box body portion 51 covers an opening side of second box body portion 52 to form box body 5 with accommodating space 53. First box body portion 51 and second box body portion 52 may also be both of a hollow structure with an opening on one side. An opening side of first box body portion 51 covers an opening side of second box body portion 52 to form box body 5 with accommodating space 53. Of course, first box body portion 51 and second box body portion 52 may be of various shapes, such as a cylinder and a cuboid.

In order to improve the airtightness of the connection between first box body portion 51 and second box body portion 52, a sealing member, such as s sealant and a seal ring, may also be arranged between first box body portion 51 and second box body portion 52.

Assuming that first box body portion 51 is covered on the top of second box body portion 52, first box body portion 51 may also be referred to as an upper box cover, and second box body portion 52 may also be referred to as a lower box body.

In battery 2, there may be one or a plurality of battery cells. If there are a plurality of battery cells, the plurality of battery cells may be in series connection or in parallel connection or in parallel-series connection. The parallel-series connection refers to that there are both series connection and parallel connection in the plurality of battery cells. The plurality of battery cells may be in series connection, parallel connection, or parallel-series connection directly, and then the whole composed of the plurality of battery cells may be accommodated in box body 5. Of course, a plurality of battery cells may be in series connection, parallel connection, or parallel-series connection first to form battery module 6, and then a plurality of battery modules 6 are in series connection, parallel connection, or parallel-series connection to form a whole and are accommodated in box body 5.

Fig. 3 is a schematic structural diagram of a battery module shown in Fig. 2. As shown in Fig. 3, in some embodiments, there are a plurality of battery cells. A plurality of battery cells are in series connection, parallel connection, or parallel-series connection to form battery module 6 first. A plurality of battery modules 6 are in series connection, parallel connection, or parallel-series connection to form a whole and are accommodated in the box body.

The plurality of battery cells in battery module 6 may be electrically connected through a convergence component, so as to realize the parallel connection, series connection, or parallel-series connection of the plurality of battery cells in battery module 6.

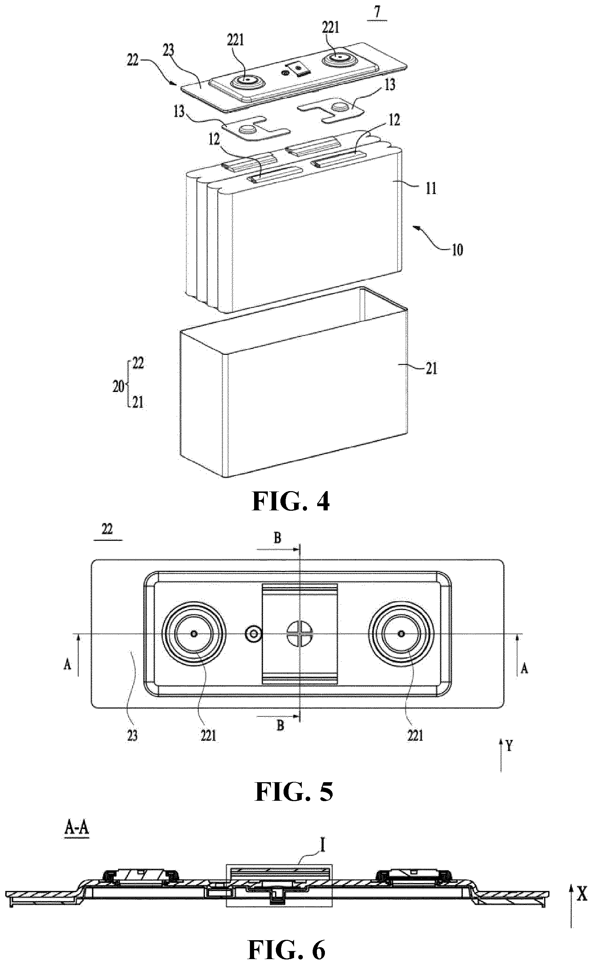

Fig. 4 is a schematic exploded diagram of a battery cell according to some embodiments of the present application. As shown in Fig. 4, battery cell 7 provided by the embodiments of the present application includes electrode assembly 10 and shell assembly 20, and electrode assembly 10 is contained in shell assembly 20.

In some embodiments, shell assembly 20 may also be used for accommodating an electrolyte solution. Shell assembly 20 may be of various structural forms.

In some embodiments, shell assembly 20 may include case 21 and end cover assembly 22. Case 21 is a hollow structure with one side open. End cover assembly 22 covers the opening of case 21 and forms a sealed connection to form an accommodating cavity for accommodating electrode assembly 10 and the electrolyte solution.

In some embodiments, end cover assembly 22 includes end cover 23, and end cover 23 covers the opening of case 21. End cover 23 may be of various structures, for example, end cover 23 is of a plate structure. Exemplarily, in FIG. 4, case 21 is of a cylindrical structure, end cover 23 is of a plate structure, and end cover 23 covers an opening at the top of case 21.

End cover 23 may be made of an insulating material (such as plastic), or may be made of a conductive material (such as metal). When end cover 23 is made of a metal material, end cover assembly 22 may also include an insulating member (not shown), and the insulating member is located on one side of end cover 23 facing electrode assembly 10, so that end cover 23 and electrode assembly 10 are insulated and separated.

In some embodiments, end cover assembly 22 may further include electrode terminal 221, and electrode terminal 221 is installed on end cover 23. There are two electrode terminals 221, and two electrode terminals 221 are respectively defined as a positive electrode terminal and a negative electrode terminal. The positive electrode terminal and the negative electrode terminal are both used for being electrically connected to electrode assembly 10 to output electric energy generated by electrode assembly 10.

In some other embodiments, shell assembly 20 may also be of another structure. For example, shell assembly 20 includes case 21 and two end cover assemblies 22. Case 21 is a hollow structure with two opposite sides open. One end cover assembly 22 correspondingly covers one opening of case 21 and forms a sealed connection to form an accommodating cavity for accommodating electrode assembly 10 and the electrolyte solution. In this structure, one end cover assembly 22 may be provided with two electrode terminals 221, while the other end cover assembly 22 may not be provided with any electrode terminal, or two end cover assemblies 22 may each be provided with one electrode terminal 221.

In battery cell 7, there may be one or a plurality of electrode assemblies 10 accommodated in shell assembly 20. Exemplarily, in Fig. 4, there are four electrode assemblies 10.

Electrode assembly 10 may include a positive electrode sheet, a negative electrode sheet, and a spacer. Electrode assembly 10 may be a wound electrode assembly, a laminated electrode assembly, or an electrode assembly in other forms.

In some examples, electrode assembly 10 is a wound electrode assembly. The positive electrode sheet, the negative electrode sheet, and the spacer all have strip-shaped structures. In an example of the present application, the positive electrode sheet, the spacer, and the negative electrode sheet may be stacked in sequence and wound for more than two turns to form electrode assembly 10.

In some other embodiments, electrode assembly 10 is a laminated electrode assembly. Specifically, electrode assembly 10 includes a plurality of positive electrode sheets and a plurality of negative electrode sheets. The positive electrode sheets and the negative electrode sheets are alternately stacked, and a stacking direction is parallel to a thickness direction of the positive electrode sheets and a thickness direction of the negative electrode sheets.

From the appearance of electrode assembly 10, electrode assembly 10 includes main body part 11 and tab portion 12 connected to main body part 11. Exemplarily, tab portion 12 extends from an end of main body part 11 close to end cover assembly 22.

In some embodiments, there are two tab portions 12, and two tab portions 12 are respectively defined as a positive tab portion and a negative tab portion. The positive tab portion and the negative tab portion may extend from the same end of main body part 11, or may extend from opposite ends of main body part 11 respectively.

Main body part 11 is a core part of electrode assembly 10 for realizing charging and discharging functions, and tab portion 12 is used for leading out current generated by main body part 11. Main body part 11 includes a positive electrode current collector portion of a positive electrode current collector, a positive electrode active material layer, a negative electrode current collector portion of a negative electrode current collector, a negative electrode active material layer, and a spacer. The positive tab portion includes a plurality of positive tabs, and the negative tab portion includes a plurality of negative tabs.

Tab portion 12 is used for being electrically connected to electrode terminal 221. Tab portion 12 may be directly connected to the electrode terminal by means of welding or the like, or may be indirectly connected to electrode terminal 221 through another component. For example, battery cell 7 further includes current collecting member 13, current collecting member 13 is used for electrically connecting electrode terminal 221 and tab portion 12. There are two current collecting members 13, and two current collecting members 13 are respectively defined as a positive current collecting member and a negative current collecting member, the positive current collecting member is used for electrically connecting the positive electrode terminal and the positive tab portion, and the negative current collecting member is used for electrically connecting the negative electrode terminal and the negative tab portion.

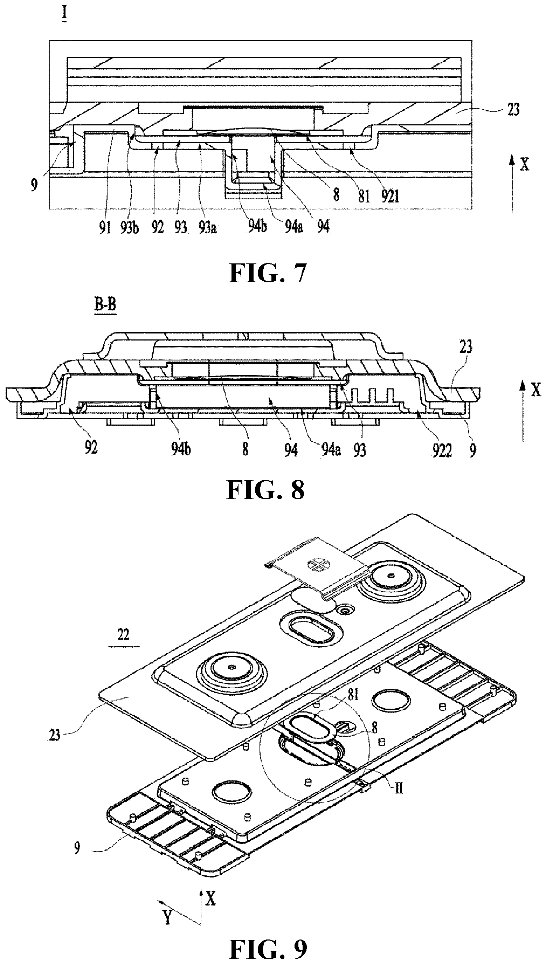

Fig. 5 is a schematic structural diagram of an end cover assembly according to some embodiments of the present application; Fig. 6 is a schematic sectional diagram of the end cover assembly shown in Fig. 5 along line A-A; Fig. 7 is a schematic enlarged diagram of the end cover assembly shown in Fig. 6 at position I; and FIG. 8 is a schematic sectional diagram of the end cover assembly shown in FIG. 5 along line B-B.

In some embodiments, as shown in Fig. 5 to Fig. 8, end cover assembly 22 includes: end cover 23; pressure relief mechanism 8, pressure relief mechanism 8 being arranged on end cover 23, pressure relief mechanism 8 including weak portion 81, and pressure relief mechanism 8 being configured to rupture along weak portion 81 to release the pressure inside the battery cell (not shown in Fig. 5 to Fig. 8) when the pressure reaches a threshold; and insulating member 9, insulating member 9 being located on one side of end cover 23 facing an electrode assembly (not shown in Fig. 5 to Fig. 8) of the battery cell, insulating member 9 including base portion 91 and guide portion 92 arranged on base portion 91, base portion 91 being connected to end cover 23, and guide portion 92 communicating the space between base portion 91 and pressure relief mechanism 8 with the space on one side of base portion 91 facing away from weak portion 81, wherein in a thickness direction of end cover 23, a projection of guide portion 92 does not overlap a projection of weak portion 81, so as to reduce an impact of an electrolyte solution on weak portion 81 when the electrolyte solution of battery cell 7 flows into the space between base portion 91 and pressure relief mechanism 8 through guide portion 92.

It should be noted here that an X direction shown in Fig. 5 to Fig. 8 represents the thickness direction of end cover 23; a Y direction represents a first direction, and first direction Y is perpendicular to thickness direction X of end cover 23. First direction Y may be a width direction of end cover 23, or a direction forming a certain angle with the width direction of end cover 23, which is not specifically limited here.

End cover 23 may be made of an insulating material or a conductive material, and is used for isolating the electrolyte solution from the external environment. Exemplarily, the conductive material may be copper, iron, aluminum, stainless steel, aluminum alloy, or the like. End cover 23 may be used for mounting electrode terminal 221. Moreover, when pressure relief mechanism 8 is actuated, an internal pressure of the battery cell is released through end cover 23.

Pressure relief mechanism 8 is used for relieving the internal pressure when the internal pressure of the battery cell reaches a threshold. When the battery cell generates more gas so that the internal pressure of the case (not shown in Fig. 5 to Fig. 8) increases and reaches a threshold, weak portion 81 arranged in pressure relief mechanism 8 is broken, thereby forming an exhaust channel to quickly release the gas, thereby reducing the risk of battery cell explosion. Weak portion 81 refers to a part of pressure relief mechanism 8 which is weak in strength relative to other parts of pressure relief mechanism 8 and is easy to be broken, crushed, torn, or opened. Exemplarily, thinning is performed on a predetermined region of pressure relief mechanism 8, and the thinned part forms weak portion 81. Alternatively, material treatment is performed on the predetermined region of pressure relief mechanism 8, so that the strength of the region is weaker than that of other regions, and the region with low strength forms weak portion 81. In the embodiments of the present application, weak portion 81 may be in a shape such as a ring structure or a strip structure.

Insulating member 9 may function to isolate end cover 23 from the electrode assembly, thereby preventing end cover 23 from contacting the electrode assembly to cause the risk of a short circuit of the battery cell. In this embodiment, insulating member 9 is made of an insulating material, and insulating member 9 may be made of a material such as rubber or plastic.

During the use of the battery cell, such as transportation, temperature change, or charging and discharging, the electrolyte solution in the battery cell may impact weak portion 81 of pressure relief mechanism 8 due to the vibration of the battery cell, so that when the internal pressure of the battery cell does not reach the threshold, pressure relief mechanism 8 may be actuated in advance, resulting in poor reliability and safety performance of the battery cell.

In the embodiments of the present application, insulating member 9 includes base portion 91 and guide portion 92 arranged on base portion 91. Base portion 91 is connected to end cover 23. Base portion 91 is capable of isolating end cover 23 and the electrode assembly, and ensuring the reliability of the battery cell. Guide portion 92 communicates the space between base portion 91 and pressure relief mechanism 8 with the space on the side of base portion 91 facing away from weak portion 81. When thermal runaway occurs in the battery cell, the pressure inside the battery cell is capable of being relieved to the outside of the battery cell through guide portion 92. In thickness direction X of end cover 23, the projection of guide portion 92 does not overlap the projection of weak portion 81. When the electrolyte solution flows through guide portion 92 to the space between base portion 91 and pressure relief mechanism 8, it is capable of being buffered in the space between base portion 91 and pressure relief mechanism 8 to reduce the impact on weak portion 81 of pressure relief mechanism 8, and reduce the risk of weak portion 81 being broken when the internal pressure of the battery cell does not reach the threshold, thereby protecting pressure relief mechanism 8 and improving the reliability and safety performance of using battery cell 7.

As shown in Fig. 7 and Fig. 8, in some embodiments, the projection of guide portion 92 in thickness direction X of end cover 23 is located outside the projection of weak portion 81 in thickness direction X of end cover 23. Guide portion 92 and weak portion 81 are arranged in a staggered manner, and the electrolyte solution flows into the space between base portion 91 and pressure relief mechanism 8 through guide portion 92, and flows from the outer side of weak portion 81 to weak portion 81, so that the electrolyte solution is capable of being effectively buffered, thereby significantly reducing an impact force on weak portion 81 and reducing the risk of weak portion 81 being broken. The strength of a part where pressure relief mechanism 8 is connected to end cover 23 is relatively high. When the electrolyte solution flows into the space between base portion 91 and pressure relief mechanism 8, it first flows through this part. The high strength may reduce the possibility of creep deformation of pressure relief mechanism 8, thereby reducing the risk of weak portion 81 being damaged and further improving the reliability of using pressure relief mechanism 8.

In some other embodiments, the projection of guide portion 92 in the thickness direction of end cover 23 is located inside the projection of weak portion 81 in the thickness direction of end cover 23. The electrolyte solution flows into the space between base portion 91 and pressure relief mechanism 8 through guide portion 92, and the electrolyte solution is buffered, thereby reducing the risk of creep deformation of pressure relief mechanism 8 and further improving the reliability of using pressure relief mechanism 8.

In order to further protect pressure relief mechanism 8, as shown in Fig. 7 and Fig. 8, in some embodiments, the projection of guide portion 92 in thickness direction X of end cover 23 is located outside the projection of pressure relief mechanism 8 in thickness direction X of end cover 23. Guide portion 92 and pressure relief mechanism 8 are arranged in a staggered manner. When the electrolyte solution flows into the space between base portion 91 and pressure relief mechanism 8 through guide portion 92, it will not directly impact pressure relief mechanism 8, thereby reducing the risk of weak portion 81 being broken. The electrolyte solution directly impacts end cover 23, and since end cover 23 has high strength and is not easily deformed, it will not drive pressure relief mechanism 8 to undergo creep deformation, thereby further protecting pressure relief mechanism 8.

In order to further protect weak portion 81, still referring to Fig. 7 and Fig. 8, in some embodiments, insulating member 9 further includes first concave portion 93 formed by recessing relative to an outer surface of base portion 91 in a direction facing away from end cover 23. Guide portion 92 is arranged on a bottom wall of first concave portion 93, that is, first bottom wall 93a, and guide portion 92 communicates first concave portion 93 with the space on the side of base portion 91 facing away from weak portion 81. First concave portion 93 is capable of forming a flow channel. When the electrolyte solution flows into the space between base portion 91 and pressure relief mechanism 8 through guide portion 92, the electrolyte solution is capable of being further buffered in first concave portion 93, and the impact of the buffered electrolyte solution on pressure relief mechanism 8 will be further reduced. It should be noted that, in the embodiment of the present application, the outer surface of base portion 91 is a surface of base portion 91 facing end cover 23.

In some embodiments, a side wall of first concave portion 93, that is, first side wall 93b, is arranged around weak portion 81, an overall occupied area of first concave portion 93 is relatively small, and an occupied area of base portion 91 is relatively large. Base portion 91 with the larger area is connected to end cover 23, which is capable of better supporting end cover 23.

In order to further protect weak portion 81, still referring to Fig. 7 and Fig. 8, in some embodiments, insulating member 9 further includes second concave portion 94 formed by recessing relative to the outer surface of base portion 91 in the direction facing away from end cover 23. Second concave portion 94 is at least partially located outside first concave portion 93 in first direction Y and in communication with first concave portion 93, and first direction Y is perpendicular to thickness direction X of end cover 23. Guide portion 92 may further be arranged on a bottom wall of second concave portion 94, that is, second bottom wall 94a, and is located on the outer side of first concave portion 93 in first direction Y. Guide portion 92 communicates second concave portion 94 with the space on the side of base portion 91 facing away from weak portion 81.

Second concave portion 94 is in communication with first concave portion 93 to jointly form a flow channel. The electrolyte solution is capable of flowing into second concave portion 94 from guide portion 92 and being buffered in the flow channel. The impact of the buffered electrolyte solution on pressure relief mechanism 8 will be further reduced.

Optionally, a part of second concave portion 94 is formed on a bottom wall of first concave portion 93, that is, first bottom wall 93a, and the depth of second concave portion 94 is greater than the depth of first concave portion 93. A part of the electrolyte solution flows into second concave portion 94 through guide portion 92 arranged on second bottom wall 94a, and a part of the electrolyte solution flows into first concave portion 93 through guide portion 92 arranged on first bottom wall 93a. The electrolyte solution is buffered in first concave portion 93 and second concave portion 94 respectively, so as to reduce the impact force on pressure relief mechanism 8.

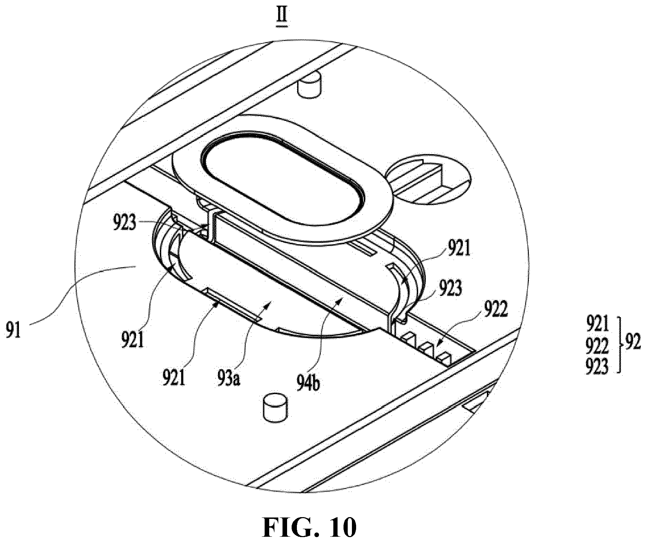

Fig. 9 is a schematic exploded diagram of the end cover assembly shown in Fig. 5; and Fig. 10 is a schematic enlarged diagram of the end cover assembly shown in Fig. 9 at position II.

As shown in Fig. 8 to Fig. 10, guide portion 92 has various arrangement forms, and may be flexibly arranged according to the structure of end cover assembly 22.

As some examples, guide portion 92 may include a plurality of first guide holes 921, and the plurality of first guide holes 921 are arranged at intervals in a circumferential direction of weak portion 81. The electrolyte solution flows smoothly into first concave portion 93 from the circumferential direction of weak portion 81, and the electrolyte solution is buffered in first concave portion 93. The impact of the electrolyte solution on weak portion 81 is relatively uniform, and it is capable of preventing weak portion 81 from being destroyed by a local pressure. First guide holes 921 may be arranged on first bottom wall 93a, and first guide holes 921 communicate first concave portion 93 with the space on the side of base portion 91 facing away from weak portion 81.

The shape of first guide hole 921 can be adapted to a peripheral contour of weak portion 81, that is, it is arranged according to an extension track of weak portion 81, so that the electrolyte solution flows in from the periphery of weak portion 81, and is capable of flowing evenly and gently to weak portion 81, thereby reducing the risk of local stress concentration in weak portion 81. Exemplarily, weak portion 81 is of a ring structure, the shape of first guide hole 921 may be arranged as an annular hole, and the size and shape of the hole may be adjusted according to the extension track. Alternatively, weak portion 81 is of a strip structure, first guide hole 921 may be arranged as a strip hole, and one or a plurality of first guide holes 921 may be arranged. When a plurality of first guide holes 921 are arranged, the plurality of first guide holes 921 are respectively arranged on two sides of weak portion 81.

As some other examples, guide portion 92 may further include third guide hole 923, third guide hole 923 is at least partially arranged on a side wall of second concave portion 94, that is, second side wall 94b, and is in communication with first guide hole 921. First guide hole 921 is in communication with third guide hole 923, which is capable of increasing the flow channel, facilitating the rapid flow of the electrolyte solution, and preventing the electrolyte solution from accumulating on the side of insulating member 9 facing electrode assembly 10 to cause an excessive pressure and damage insulating member. 9, or the like.

As still other examples, guide portion 92 may include second guide hole 922, second guide hole 922 is arranged on a bottom wall of second concave portion 94, that is, second bottom wall 94a, second guide hole 922 is located on the outer side of concave portion 93 in first direction Y, and second guide hole 922 communicates second concave portion 94 with the space on the side of base portion 91 facing away from weak portion 81.

Although the present application has been described with reference to the preferred embodiments, various improvements may be made thereto and components thereof may be replaced with equivalents without departing from the scope of the present application. In particular, the technical features mentioned in the various examples may be combined in any manner as long as there is no structural conflict. The present application is not limited to the specific embodiments disclosed herein, but rather includes all technical solutions falling within the scope of the claims.

## Claims

1. An end cover assembly for a battery cell, the end cover assembly comprising:
an end cover;
a pressure relief mechanism, the pressure relief mechanism being arranged on the end cover, the pressure relief mechanism comprising a weak portion, and the pressure relief mechanism being configured to rupture along the weak portion to release the pressure inside the battery cell when the pressure reaches a threshold; and
an insulating member, the insulating member being located on one side of the end cover facing an electrode assembly of the battery cell, the insulating member comprising a base portion and a guide portion arranged on the base portion, the base portion being connected to the end cover, and the guide portion communicating the space between the base portion and the pressure relief mechanism with the space on one side of the base portion facing away from the weak portion,
wherein in a thickness direction of the end cover, a projection of the guide portion does not overlap with a projection of the weak portion, so as to reduce an impact of the electrolyte solution of the battery cell on the weak portion when the electrolyte solution flows into the space between the base portion and the pressure relief mechanism through the guide portion.

2. The end cover assembly according to claim 1, wherein the projection of the guide portion in the thickness direction of the end cover is located outside the projection of the weak portion in the thickness direction of the end cover.

3. The end cover assembly according to claim 2, wherein the projection of the guide portion in the thickness direction of the end cover is located outside a projection of the pressure relief mechanism in the thickness direction of the end cover.

4. The end cover assembly according to claim 1, wherein the guide portion comprises a plurality of first guide holes, and the plurality of first guide holes are arranged at intervals in a circumferential direction of the weak portion.

5. The end cover assembly according to claim 4, wherein the shape of the first guide hole is adapted to a peripheral contour of the weak portion.

6. The end cover assembly according to claim 4, wherein the insulating member further comprises a first concave portion formed by recessing relative to an outer surface of the base portion in a direction facing away from the end cover,
wherein the plurality of first guide holes are arranged on a bottom wall of the first concave portion, and the first guide holes communicate the first concave portion with the space on the side of the base portion facing away from the weak portion.

7. The end cover assembly according to claim 6, wherein the side wall of the first concave portion is arranged around the weak portion.

8. The end cover assembly according to claim 6, wherein the insulating member further comprises a second concave portion by recessing relative to the outer surface of the base portion in the direction facing away from the end cover, and at least a part of the second concave portion is located on an outer side of the first concave portion in a first direction and is in communication with the first concave portion, the first direction being perpendicular to the thickness direction of the end cover;
wherein the guide portion comprises a second guide hole, the second guide hole is arranged on a bottom wall of the second concave portion and is located on the outer side of the first concave portion in the first direction, and the second guide hole communicates the second concave portion with the space on the side of the base portion facing away from the weak portion.

9. The end cover assembly according to claim 8, wherein a part of the second concave portion is formed on the bottom wall of the first concave portion, and the depth of the second concave portion is greater than the depth of the first concave portion.

10. The end cover assembly according to claim 8, wherein the guide portion further comprises a third guide hole, at least a part of the third guide hole is arranged on a side wall of the second concave portion and in communication with the first guide hole.

11. A battery cell, comprising:
a shell assembly, comprising a case and the end cover assembly according to any one of claims 1 to 10, the end cover assembly covering the case; and
an electrode assembly accommodated in the case.

12. A battery, comprising a plurality of battery cells according to claim 11.

13. An electrical apparatus, comprising the battery according to claim 12, and the battery being configured to provide electric energy.
